(19) **Europäisches Patentamt / European Patent Office / Office européen des brevets**

(11) **EP 4 425 205 A1**

(12) # EUROPEAN PATENT APPLICATION

(43) Date of publication:
**04.09.2024 Bulletin 2024/36**

(21) Application number: **24159748.3**

(22) Date of filing: **26.02.2024**

(51) International Patent Classification (IPC):
**G01S 5/00** *(2006.01)*        **G01S 5/02** *(2010.01)*
**G01S 13/00** *(2006.01)*       **G01S 7/00** *(2006.01)*

(52) Cooperative Patent Classification (CPC):
**G01S 5/0036; G01S 5/0218**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.03.2023 GB 202303027**

(71) Applicant: **Nokia Technologies Oy**
**02610 Espoo (FI)**

(72) Inventors:
• **BARBU, Oana-Elena**
  **9220 Aalborg (DK)**
• **YANAKIEV, Boyan**
  **9220 Aalborg (DK)**

(74) Representative: **Nokia EPO representatives**
**Nokia Technologies Oy**
**Karakaari 7**
**02610 Espoo (FI)**

(54) **LINE-OF-SIGHT REFERENCE SIGNALS**

(57) An apparatus, method and computer program is described comprising: determining one or more parameters (including an angle of arrival) of each of one or more uplink reference signals received at a communication device; determining one or more parameters (including an angle of arrival) of each of one or more downlink reference signals received by the communication device; identifying groups of non-line-of-sight signals, wherein each group comprises one or more of said uplink reference signals and one or more of said downlink reference signals, wherein said groups are identified based on matching angles of arrival of the respective uplink and downlink reference signals at the communication device; and excluding downlink reference signals of the identified groups of non-line-of-sight signals from a set of candidate line-of-sight downlink reference signals.

Fig. 4

# Description

## Field

The present specification relates to identifying candidate line-of-sight (LOS) signals in mobile communication systems.

## Background

Reference signals, such as positioning reference signals (PRS), can be used to estimate the position of a node in a mobile communication system. Due to the multipath nature of typical wireless channels, a positioning receiver may observe multiple copies of the same positioning signal. Accurate positioning can be aided by correct Line of Sight (LOS) identification.

## Summary

In a first aspect, this specification describes an apparatus comprising means for performing: determining (e.g. measuring) one or more parameters of each of one or more uplink reference signals (e.g. sounding reference signal(s)) received at a communication device, wherein the parameters of the uplink reference signals include an angle of arrival of the respective uplink reference signal at the communication device; determining (e.g. measuring) one or more parameters of each of one or more downlink reference signals (e.g. positioning reference signal(s)) received by the communication device, wherein said parameters of said downlink reference signals include an angle of arrival of the respective downlink reference signal at the communication device; identifying groups of non-line-of-sight signals, wherein each group comprises one or more of said uplink reference signals and one or more of said downlink reference signals, wherein said groups are identified based on matching angles of arrival of the respective uplink and downlink reference signals at the communication device; and excluding downlink reference signals of the identified groups of non-line-of-sight signals from a set of candidate line-of-sight downlink reference signals.

The apparatus may further comprise means for performing: compensating for differences in an orientation of the communication device when receiving said uplink and downlink reference signals. For example, the apparatus may further comprise means for performing: determining said orientation for use in compensating for said differences in orientation.

The apparatus may further comprise means for performing: identifying a most-likely line-of-sight downlink reference signal from the set of candidate line-of-sight downlink reference signals. The most-likely line-of-sight downlink reference signal may be based on: gains of the candidate line-of-sight downlink reference signals; delays of the candidate line-of-sight downlink reference signals; or a combination of the gains and the delays of the candidate line-of-sight downlink reference signals. Alternatively, or in addition, one or more sensors (e.g. proximity sensors) may be used in the determination of most-likely line-of-sight signals.

The apparatus may further comprise means for reporting (e.g. to a location management function (LMF)) details of the identified most-likely line-of-sight downlink reference signal and/or details of one or more identified reflected non-light-of-sight signals.

In some example embodiments, the parameters of said one or more uplink reference signals may further comprise one or more of: a gain of the respective reflected signal and a delay of the respective reflected signal.

In some example embodiments, the parameters of the downlink reference signals may further comprise one or more of: a gain of the respective downlink reference signal and a delay of the respective downlink reference signal.

The apparatus may further comprise means for performing: determining a line-of-sight probability estimate (e.g. based on relative powers and/or delays) for each of the set of candidate line-of-sight downlink reference signals. Alternatively, or in addition, at least some of the candidate line-of-sight downlink reference signals may be ranked in order of LOS likelihood.

The apparatus may further comprise means for performing: determining that one or more of said uplink reference signals and one or more of said downlink reference signals have matching angles of arrival in the event that the angle of arrival of the respective uplink signal(s) and the angle of arrival of the respective downlink reference signal(s) differ by less than a threshold amount.

The apparatus may include means (e.g. a transmitter) for transmitting the uplink reference signal. The apparatus may include means (e.g. a receiver) for receiving the downlink reference signals. However, the transmitter and/or receiver may be provided separate to (e.g. in communication with) the apparatus.

In some example embodiments, the communication device is a hybrid device comprising: a first portion or a first device for transmitting uplink reference signals; and a second portion or a second device for receiving downlink reference signals. A transmitter and receiver of a hybrid device may be in different positions (e.g. slightly difference positions) and may be provided by different elements of a system making up the hybrid device. Indeed, the hybrid device may consist of groups user devices, or two or more tethered devices.

In some example embodiments, some or all of said uplink reference signals are reflections of an uplink reference signal transmitted by the communication device.

The apparatus may be a full-duplex communication device (e.g. a UE of a mobile communication system). In some example embodiments, full-duplex functionality is inherent to the device communication (e.g. the device includes TX and RX chains that can be activated simultaneously). Alternatively, full-duplex functionality may be enabled in some other way, for example by tethering/grouping two or more devices, with separate devices transmitting and receiving).

In a second aspect, this specification describes a method comprising: determining one or more parameters of each of one or more uplink reference signals received at a communication device, wherein the parameters of the uplink reference signals include an angle of arrival of the respective uplink reference signal at the communication device; determining one or more parameters of each of one or more downlink reference signals received by the communication device, wherein said parameters of said downlink reference signals include an angle of arrival of the respective downlink reference signal at the communication device; identifying groups of non-line-of-sight signals, wherein each group comprises one or more of said uplink reference signals and one or more of said downlink reference signals, wherein said groups are identified based on matching angles of arrival of the respective uplink and downlink reference signals at the communication device; and excluding downlink reference signals of the identified groups of non-line-of-sight signals from a set of candidate line-of-sight downlink reference signals.

Some example embodiments further comprise: compensating for differences in an orientation of the communication device when receiving said uplink and downlink reference signals (e.g. including determining said orientation for use in compensating for said differences in orientation).

Some example embodiments further comprise: identifying a most-likely line-of-sight downlink reference signal from the set of candidate line-of-sight downlink reference signals. The most-likely line-of-sight downlink reference signal may be based on: gains of the candidate line-of-sight downlink reference signals; delays of the candidate line-of-sight downlink reference signals; or a combination of the gains and the delays of the candidate line-of-sight downlink reference signals. Alternatively, or in addition, one or more sensors (e.g. proximity sensors) may be used in the determination of most-likely line-of-sight signals.

Some example embodiments further comprise reporting (e.g. to a location management function) details of the identified most-likely line-of-sight downlink reference signal and/or detail of one or more identified reflected non-light-of-sight signals.

In some example embodiments, the parameters of said one or more uplink reference signals may further comprise one or more of: a gain of the respective reflected signal and a delay of the respective reflected signal.

In some example embodiments, the parameters of the downlink reference signals may further comprise one or more of: a gain of the respective downlink reference signal and a delay of the respective downlink reference signal.

reference signal.

Some example embodiments further comprise determining a line-of-sight probability estimate (e.g. based on relative powers and/or delays) for each of the set of candidate line-of-sight downlink reference signals. Alternatively, or in addition, at least some of the candidate line-of-sight downlink reference signals may be ranked in order of LOS likelihood.

Some example embodiments further comprise determining that one (or more) of said uplink reference signals and one (or more) of said downlink reference signals have matching angles of arrival in the event that the angle of arrival of the respective uplink signal(s) and the angle of arrival of the respective downlink reference signal(s) differ by less than a threshold amount.

The method may further comprise transmitting the uplink reference signal and/or receiving the downlink reference signals.

In some example embodiments some or all of said uplink reference signals are reflections of an uplink reference signal transmitted by the communication device.

In a third aspect, this specification describes computer-readable instructions which, when executed by a computing apparatus, cause the computing apparatus to perform (at least) any method as described herein (including the method of the second aspect described above).

In a fourth aspect, this specification describes a computer-readable medium (such as a non-transitory computer-readable medium) comprising program instructions stored thereon for performing (at least) any method as described herein (including the method of the second aspect described above).

In a fifth aspect, this specification describes an apparatus comprising: at least one processor; and at least one memory including computer program code which, when executed by the at least one processor, causes the apparatus to perform (at least) any method as described herein (including the method of the second aspect described above).

In a sixth aspect, this specification describes a computer program comprising instructions which, when executed by an apparatus, cause the apparatus to: determine one or more parameters of each of one or more uplink reference signals received at a communication device, wherein the parameters of the uplink reference signals include an angle of arrival of the respective uplink reference signal at the communication device; determine one or more parameters of each of one or more downlink reference signals received by the communication device, wherein said parameters of said downlink reference signals include an angle of arrival of the respective downlink reference signal at the communication device; identify groups of non-line-of-sight signals, wherein each group comprises one or more of said uplink reference signals and one or more of said downlink reference signals, wherein said groups are identified based on matching angles of arrival of the respective uplink and downlink reference signals at the communication device; and exclude downlink reference signals of the identified groups of non-line-of-sight signals from a set of candidate line-of-sight downlink reference signals.

In a seventh aspect, this specification describes: an SRS signal processor (or some other means) for determining one or more parameters of each of one or more uplink reference signals received at a communication device, wherein the parameters of the uplink reference signals include an angle of arrival of the respective uplink reference signal at the communication device; a PRS signal processor (or some other means) for determining one or more parameters of each of one or more downlink reference signals received by the communication device, wherein said parameters of said downlink reference signals include an angle of arrival of the respective downlink reference signal at the communication device; an NLOS detection module (or some other means) for identifying groups of non-line-of-sight signals, wherein each group comprises one or more of said uplink reference signals and one or more of said downlink reference signals, wherein said groups are identified based on matching angles of arrival of the respective uplink and downlink reference signals at the communication device; and a LOS detection module (or some other means) for excluding downlink reference signals of the identified groups of non-line-of-sight signals from a set of candidate line-of-sight downlink reference signals.

**Brief description of the drawings**

Example embodiments will now be described, by way of example only, with reference to the following schematic drawings, in which:

FIG. 1 is a block diagram of a system in accordance with an example embodiment;
FIG. 2 is a flow chart showing an algorithm in accordance with an example embodiment;
FIG. 3 is a block diagram of a system in accordance with an example embodiment;
FIG. 4 is a block diagram of a system in accordance with an example embodiment;
FIG. 5 is a flow chart showing an algorithm in accordance with an example embodiment;
FIG. 6 is a message flow sequence showing an example implementation of an algorithm in accordance with an example embodiment;
FIG. 7 is a block diagram of a device in accordance with an example embodiment;
FIG. 8 shows headphones in accordance with an example embodiment;
FIG. 9 is a block diagram of a robot in accordance with an example embodiment;
FIG. 10 is a block diagram of a robotic arm in accordance with an example embodiment;
FIG. 11 shows IoT sensors in accordance with an example embodiment;
FIG. 12 is a flow chart showing an algorithm in accordance with an example embodiment;
FIG. 13 is a flow chart showing an algorithm in accordance with an example embodiment;
FIG. 14 is a block diagram of a system in accordance with an example embodiment;
FIG. 15 is a schematic diagram of components of one or more of the example embodiments described previously; and
FIG. 16 shows tangible media for storing computer-readable code which when run by a computer may perform methods according to example embodiments described herein.

**Detailed description**

The scope of protection sought for various embodiments of the disclosure is set out by the independent claims. The embodiments and features, if any, described in the specification that do not fall under the scope of the independent claims are to be interpreted as examples useful for understanding various embodiments of the disclosure.

In the description and drawings, like reference numerals refer to like elements throughout.

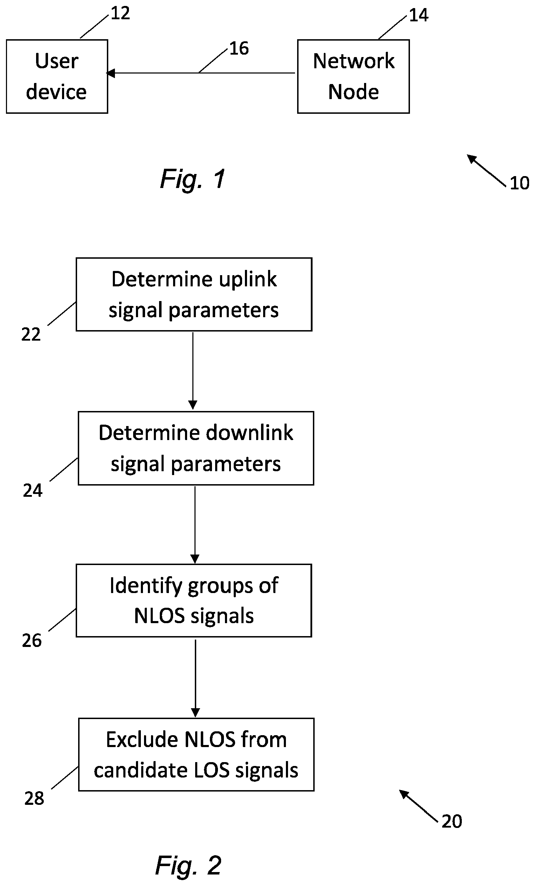

FIG. 1 is a block diagram of a system, indicated generally by the reference numeral 10, in accordance with an example embodiment. The system 10 comprises a user device 12 and a network node 14. The user device 12 may be a user equipment (UE) of a mobile communication system (such as a New Radio (NR) communication system). The network node 14 may be a gNB or similar node of that mobile communication system.

As shown in FIG. 1, the network node 14 transmits a reference signal 16 to the user device 12. The reference signal is a downlink reference signal, such as a positioning reference signal (PRS). The reference signal can be used to estimate a position of the user device 12 or to generate a position measurement (e.g. to generate a time of arrival, angle of arrival, or some other measurement).

One challenge for achieving accurate positioning in mobile communication systems (such as NR positioning) is correct Line of Sight (LOS) identification. Due to the multipath nature of a wireless channel, a positioning receiver (such as the user device 12) may observe multiple delayed copies of the same positioning signal.

For accurate positioning, it may be necessary to be able to distinguish between the copies and to correctly identify and accurately measure the signal version that travels over the direct path, i.e. the line of sight LOS path. Due to bandwidth limitations, synchronization errors and other TX and RX artifacts, these requirements may not be straightforward, and associated errors may translate in ranging and localization errors in the order of meters. Such positioning errors may be unacceptable for applications (such as Extended Reality (XR) and Internet of Things (IoT) applications) which require cm and below-cm range accuracies.

FIG. 2 is a flow chart showing an algorithm, indicated generally by the reference numeral 20, in accordance with an example embodiment.

The algorithm 20 starts at operation 22, where one or more parameters of each of one or more uplink reference signals (such as sounding reference signals (SRS)) received at (and possibly transmitted by) a user device of a mobile communication system are determined (e.g. measured). These signals may be reflected uplink reference signals. In some example embodiments, some, but not necessarily all, of the received uplink signals are reflections since, in addition to reflections, a direct path may exist between the transmitter and receiver of the of the uplink reference signals.

The parameters determined in the operation 22 include an angle of arrival of the respective uplink reference signal at the communication device (although other parameters may be determined, as discussed further below).

At operation 24 of the algorithm 20, one or more parameters of each of one or more downlink reference signals received at a user device of a mobile communication system are determined (e.g. measured). The parameters of said downlink reference signals include an angle of arrival of the respective received downlink reference signal (although other parameters may be determined, as discussed further below).

It should be noted that the operations 22 and 24 may be carried out in a different order, or may be carried out in parallel.

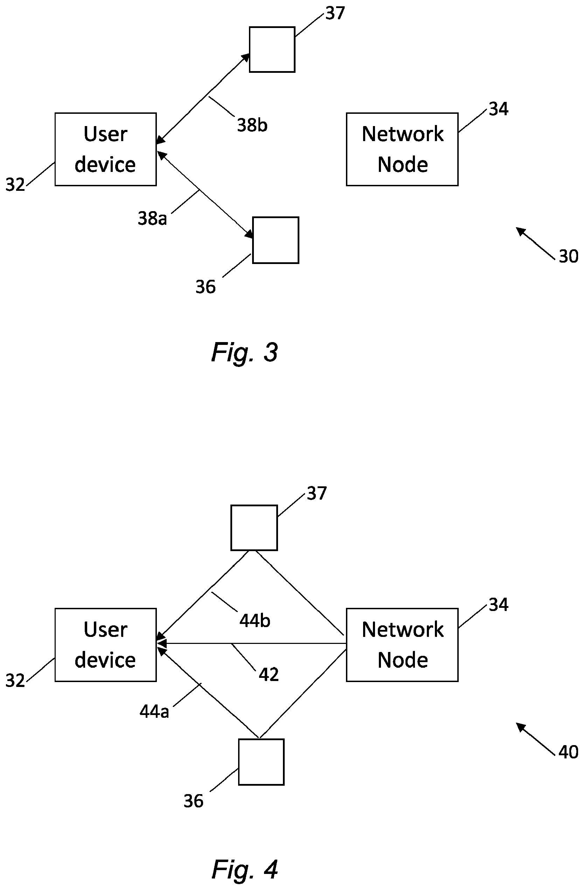

FIG. 3 is a block diagram of a system, indicated generally by the reference numeral 30, in accordance with an example embodiment. The system 30 comprises a user device 32, a network node 34, a first reflective object 36 and a second reflective object 37. The user device 32 may be a user equipment (UE) of a mobile communication system (such as a New Radio (NR) communication system) and may be the user device 12 described above. The network node 34 may be a gNB or similar node of that mobile communication system and may be the network node 14 described above. The system 30 may be used to implement the operation 22 of the algorithm 20.

As shown in FIG. 3, the user device 32 transmits and receives an uplink reference signal 38a; that uplink reference is reflected from first reflective object 36 (such that the reflection is received at the user device 32). Similarly, the user device 32 transmits and receives an uplink reference signal 38b; that uplink reference is reflected from second reflective object 37 (such that the reflection is received at the user device 32). Of course, the signals 38a and 38b may be based on the same transmitted uplink reference signal (which signal may be a reference signal that is primarily being transmitted from the user device 32 to the network node 34). The uplink reference signals may be sounding reference signals (SRS), although alternative reference signals could be used. Moreover, as discussed elsewhere herein, in some example embodiments, the reference signal may be both transmitted by, and received at, the user device without any reflection (e.g. if there is a direct path from a transmitter and a receiver of the user device 32).

FIG. 4 is a block diagram of a system, indicated generally by the reference numeral 40, in accordance with an example embodiment. The system 40 comprises the user device 32, the network node 34, the first reflective object 36 and the second reflective object 37 described above. The system 40 may be used to implement the operation 24 of the algorithm 20.

As shown in FIG. 4, the user device 32 receives a downlink reference signal 42; that downlink reference signal is a line-of-sight (LOS) signal). The user device 32 also receives reflected downlink signals 44a and 44b (reflected from first reflective object 36 and the second reflective object 37 respectively). Of course, the signals 42, 44a and 44b may be based on the same transmitted downlink reference signal. The downlink reference signals may be positioning reference signals (PRS), although alternative reference signals could be used.

At operation 26 of the algorithm 20, groups of non-line-of-sight signals are identified. Each group comprises one or more of said uplink reference signals and one or more of said downlink reference signals; for example, each group may be a pair comprising one uplink reference signal and one downlink reference signal. As discussed in detail below, said groups are identified based on matching angles of arrival of the respective uplink and downlink reference signals at the communication device. For example, the uplink signal 38a and the downlink signal 44a have matching angles of arrival at the user device 32. Similarly, the uplink signal 38b and the downlink signal 44b have matching angles of arrival at the user device 32.

At operation 28 of the algorithm 28, downlink reference signals of the groups of non-line-of-sight signals identified in the operation 26 are excluded from a set of candidate line-of-sight downlink reference signals. Thus, in the example described above, downlink signals 44a and 44b are removed from a set of candidate line-of-sight downlink reference signals (leaving only downlink reference signal 42 in this example).

The algorithm 20 may be implemented at the user device 32, or elsewhere in the system (such as at a remote processor used for positioning).

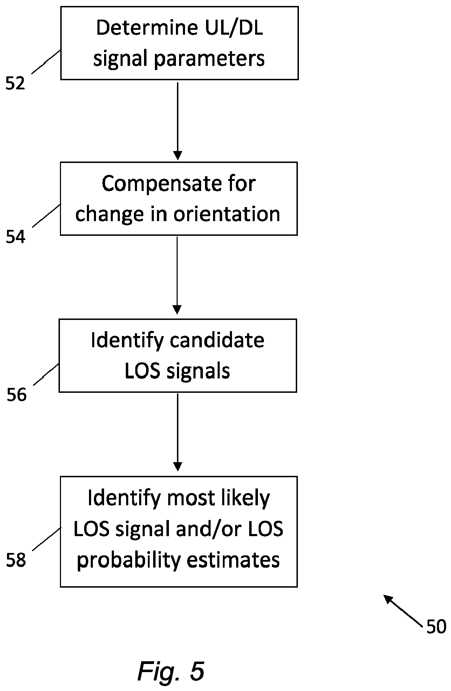

FIG. 5 is a flow chart showing an algorithm, indicated generally by the reference numeral 50, in accordance with an example embodiment.

The algorithm 50 starts at operation 52, where uplink and downlink signals parameters are identified. The operation 52 may implement the operations 22 and 24 of the algorithm 20. Thus, the algorithm 50 may be implemented using the systems 30 and 40 described above.

As operation 54, compensation for differences in an orientation of the communication device when receiving said uplink and downlink reference signals may be carried out. This compensation may be provided, for example, if the orientation of the device changes between determining uplink and downlink parameters (such as angle of arrival). Moreover, compensating for different angles of arrival may be provided in the event that different antenna are used to detect uplink and downlink signals at the user device. Implementing the operation 54 may include determining the orientation of the communication device for use in compensating for said differences in orientation.

At operation 56, candidate LOS signals are identified. The operation 56 may implement the operations 26 and 28 of the algorithm 20.

At operation 58, a most-likely line-of-sight downlink reference signal from the set of candidate line-of-sight (LOS) downlink reference signals may be identified. Alternatively, or in addition, a line-of-sight probability estimate may be determined for each of the set of candidate line-of-sight downlink reference signals, or the candidates may be ranked.

As discussed further below, the most-likely line-of-sight downlink reference signal may be determined based on gains of the candidate line-of-sight downlink reference signals and/or delays of the candidate line-of-sight downlink reference signals.

The operation 58 may be omitted (for example, if only one candidate LOS downlink reference signal remains, such as the signal 42 in the example described above). Alternatively, or in addition, the operation 54 may be omitted (for example, if one change in orientation occurs).

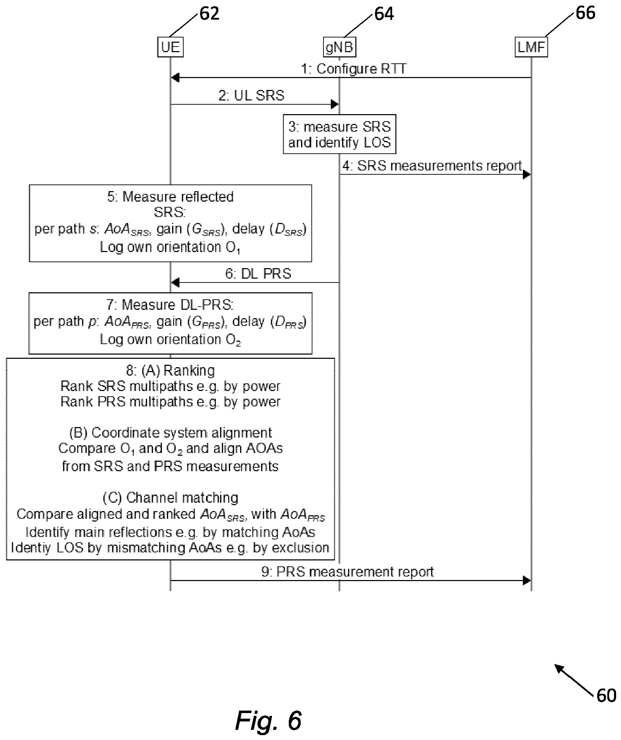

FIG. 6 is a message flow sequence, indicated generally by the reference numeral 60, showing an example implementation of an algorithm in accordance with an example embodiment. The message flow sequence 60 is an example implementation of the algorithms 20 and 50 described above.

The message flow sequence 60 shows messages sent between a user equipment (UE) 62 (similar to the user devices 12 and 32 described above), a gNB 64 (similar to the network nodes 14 and 34 described above), and a location management function (LMF) 66. The message sequence 60 includes features of an LPP protocol (Location and Positioning Protocol).

As discussed in detail below, the UE 62 may be able to identify the LOS path by sensing reflected sounding reference signals (SRS) and matching patterns of the reflected SRS signals to that of the downlink PRS received from a network node. The UE may have full-duplex (FD) capability based on having TX and RX chains that can be simultaneously activated or based on tethering/grouping two or more devices (and having relative location information for those devices).

The message sequence 60 starts at step 1, where the Location Management Function (LMF) 66 configures the User Equipment (UE) 62 with round-trip-time (RTT) positioning including the uplink (UL) SRS configuration and downlink (DL) positioning reference signal (PRS) measurements.

At step 2, the UE 62 transmits an UL SRS.

At step 3, SRS detection takes place at the gNB 64. An estimated LOS is reported to the LMF 66 by the gNB 64 (step 4).

At step 5, the UE 62 performs measurements of the reflected SRS. To implement step 5, the UE may start sampling reflected SRS $t_0$ (where $t_0 \geq 0$) seconds after the start of the SRS transmission and for T seconds. The following measurements may be taken:

- angles of arrival (AoA) of all detectable reflections $AoA_{SRS}^s$ and any potential direct paths;

- gains $G_{SRS}^s$ of the respective reflected or direct signals;

- delays $D_{SRS}^s$ of the respective reflected or direct signals; and

- a log of its own orientation $O_1$ during the above measurement campaign.

where $s \in \mathbb{N}_1$, $s \in 1: S$ is the individual identified reflection up to a total of $S$.

Step 5 is therefore an example implementation of operation 22 of the algorithm 20 described above.

At step 6, the UE 62 receives downlink PRS signals. Then, at step 7, the UE measures:

- Angles of arrival (AoAs) of all detected DL PRS copies: $AoA_{PRS}^p$

- Gains of all detected DL PRS copies: $G_{PRS}^p$

- Delays of all detected DLPRS copies: $D_{PRS}^p$

- Own orientation angle $O_2$ associated with the PRS measurement window.

where $p \in \mathbb{N}_1$, $p \in 1: P$ is the individual identified reflection up to a total of $P$.

Steps 6 and 7 are therefore an example implementation of the operation 24 of the algorithm 20 described above.

Step 8 of the message sequence 60 includes multiple parts (labelled steps 8A, 8B and 8C below).

At step 8A, the UE 62 orders by gain both the SRS and PRS measurements discussed above e.g. generates a list of ranked multipaths, ordered by received power $G$ for both SRS and PRS. For example:

- SRS ordered paths:

    a.    Path    1    consists    of:

$$G^1_{SRS}, AoA^1_{SRS}, D^1_{SRS}$$

,

    b.    Path    2    consists    of:

$$G^2_{SRS}, AoA^2_{SRS}, D^2_{SRS}$$

,

    c....

    d.    Up    to    $S$    so    that

$$G^1_{SRS} > G^2_{SRS} > \cdots > G^S_{SRS}$$

- PRS ordered paths:

    a.    Path    1    consists    of:

$$G^1_{PRS}, AoA^1_{PRS}, D^1_{PRS}$$

,

    b.    Path    2    consists    of:

$$G^2_{PRS}, AoA^2_{PRS}, D^2_{PRS}$$

,

    c....

    d.    Up    to    $P$    so    that

$$G^1_{PRS} > G^2_{PRS} > \cdots > G^P_{PRS}$$

In step 8B, the UE 62 checks if the orientation angles $O_1$ and $O_2$ are the same and if not, the UE aligns $AoA_{SRS}$ and $AoA_{PRS}$. For example, the UE may apply a rotational offset to the $AoA_{SRS}$ equal to the difference $dO = O_2 - O_1$. This operation ensures that the angle of arrivals of the two signals are expressed in the same coordinate system.

At step 8C, the ranked and aligned paths of the reflected SRS and the incoming PRS are used to enable reflections to be identified. Specifically, since the multipath channel obtained from the reflected SRS is expected to contain multipath components reflected by obstacles in the field, the AoA of the reflected SRS may be considered representative of the directions of the relevant reflectors relative to the UE. Then, the UE 62 checks the AoA of the PRS and those $AoA_{PRS}$ that match the $AoA_{SRS}$ within a given confidence interval, are tagged as reflections. Thus, reference signals can be deemed have matching angles of arrival in the event that the angle of arrival of the respective uplink signal and the angle of arrival of the respective downlink reference signal differ by less than a threshold amount.

Conversely, the AoA of the PRS which do not match the AoA of the SRS are marked as potential LoS (thereby providing an example implementation of the operation 28 of the algorithm 20 and the operation 56 of the algorithm 50).

If more than one AoA is marked as potential LoS, then the UE may select the path that is the most likely LoS. This may done by comparing the power and delays of the paths and choosing the one with larger power and/or smallest delay as the most likely LOS path (thereby implementing the operation 58 of the algorithm 50).

It should be noted that the separation of the step 8 in separates steps 8A, 8B and 8C is not essential to all example embodiments. For example, steps 8A-8C could be replaced by a joint optimizer that takes as input:

- $$G^s_{SRS}, AoA^s_{SRS}, D^s_{SRS}$$, of the reflected SRS samples

- $$G^p_{PRS}, AoA^p_{PRS}, D^p_{PRS}$$, of the received PRS samples

- Orientations $O_1$, $O_2$,

and outputs the AoA, G, D of the LoS path and additionally or optionally a LoS probability associated with the path.

At step 9, the UE 62 reports the PRS measurements as instructed e.g., including LoS indication and main reflectors information (i.e., their delays, power, etc.). Thus, the UE 62 may report (to the LMF 66) details of the most-likely line-of-sight downlink reference signal and details of each least some of the reflected non-line-of-sight signals.

As discussed further below, user devices described herein may have full-duplex (FD) capability implemented by:

- having TX and RX chains that can be simultaneously activated;
- tethering/grouping two or more devices; or
- providing a hybrid device having a first portion/device for transmitting uplink reference signals and a second portion/device for receiving downlink reference signals.

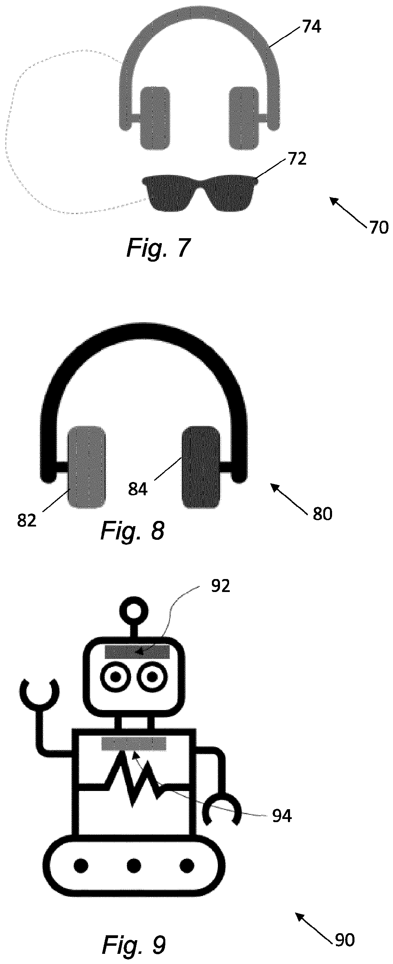

FIG. 7 is a block diagram of a device, indicated generally by the reference numeral 70, in accordance with an example embodiment. The device 70 is an extended reality (XR) device that implement full-duplex capability by tethering NR glasses 72 with NR headphones 74. An example XR scenario involves a user consuming video and audio information simultaneously. In this case, a NR positioning element can be provided in the glasses 72 (so that the NR glasses are configured for RTT). In accordance with the algorithms described above, the NR glasses 72 can be used to transmit uplink reference signals (e.g. SRS) and to subsequently receive downlink reference signals (e.g. PRS). The headphones 74 can be used to listen for the reflected SRS, thereby providing the FD RX chain.

FIG. 8 shows headphones (e.g. NR headphones), indicated generally by the reference numeral 80, in accordance with an example embodiment. The headphones 80 have a transmitter chain comprising a first antenna 82 for transmitting SRS signals and a receiver chain comprising a second antenna 84 for receiving reflected SRS signals. Thus, the headphones 80 have full-duplex (FD) functionality.

FIG. 9 is a block diagram of a robot, indicated generally by the reference numeral 90, in accordance with an example embodiment.

The robot 90 is a factory humanoid (moving) robot equipped with multiple NR radios which may implement an FD functionality by providing a first NR radio 92 embedded in the robot's head that transmits UL SRS, while a second NR radio 94 embedded in the body measures the reflected SRS. The robot 90 is an example of a hybrid device having a first portion (the first radio 92) for transmitting uplink reference signals and a second portion (the second radio 94) for receiving reflected uplink signals. One of the first and second radios 92, 94 may be used for receiving downlink reference signals.

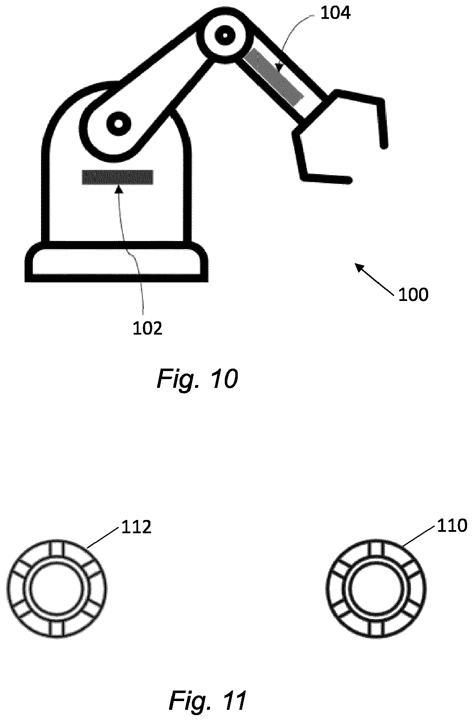

FIG. 10 is a block diagram of a robotic arm, indicated generally by the reference numeral 100, in accordance with an example embodiment. The robotic arm 100 may be used in factory automation. The robotic arm 100 may be equipped with multiple NR IoT devices, including a first NR radio 102 located on the fixed body and a second NR radio 104 located on the moving arm, thereby providing full duplex functionality.

FIG. 11 shows IoT sensors 110 and 112 in accordance with an example embodiment. The sensors may be provided on a ceiling for collecting environmental data, such as temperature, humidity, pressure, carbon dioxide levels, etc. In one example embodiment, the sensors are movable along a railing so that position information is desired. The first sensor 110 includes a first NR radio for transmitting uplink reference signals and the second sensor 112 includes a second NR radio for receiving reflections of uplink reference signals, thereby providing full duplex functionality. Either sensor may receive downlink reference signals.

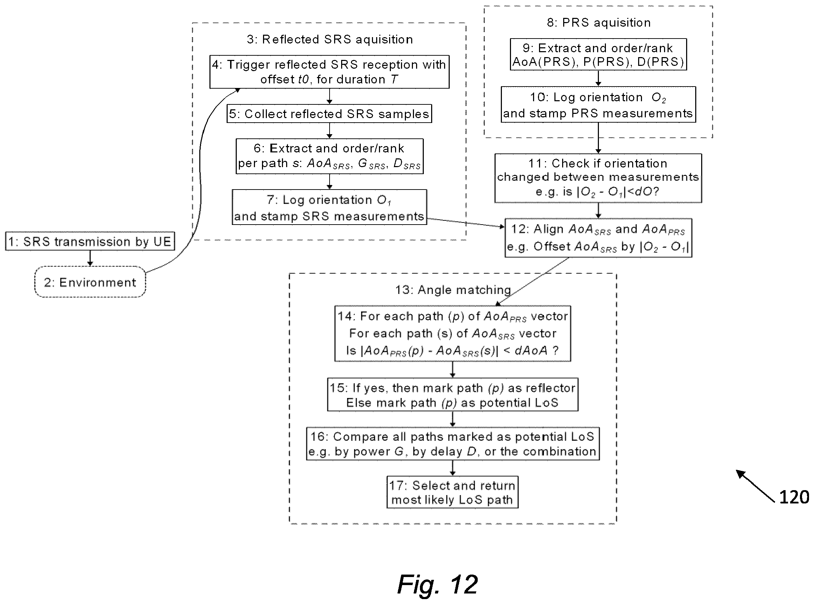

FIG. 12 is a flow chart showing an algorithm, indicated generally by the reference numeral 120, in accordance with an example embodiment.

The algorithm 120 starts at step 1, where SRS signals are transmitted into the environment by a UE.

In response to the transmitted SRS signals, reflected SRS signals are acquired, as set out in steps 4 to 7. These steps include collecting data over time period T (steps 4 and 5), extracting and ordering parameter data, including Angle of Arrival (step 6), and logging UE orientation information (step 7). The steps 4 to 7 may be implemented using an SRS signal processor.

PRS signals are also acquired, as set out in steps 9 and 10. These steps include extracting and ordering parameter data (step 9) and logging UE orientation information (step 10). The steps 9 and 10 may be implemented using a PRS signal processor.

The orientation information recorded in steps 7 and 10 can be used to correct for changes/differences in orientation, if necessary (steps 11 and 12).

Finally, angle matching is performed (steps 14 to 17) to provide an output indicating the most-likely LOS path. These steps include removing reflector paths to generate a set of candidate LOS paths (steps 14 and 15) and comparing other parameter data to identify the most likely LOS path (steps 16 and 17). The steps 15 to 17 may be implemented using an NLOS detection module for identifying NLOS paths and a LOS detection module for identifying LOS paths (e.g. for determining most-likely LOS path(s)).

More details regarding an example implementation of the algorithm 120 are provided below.

The UE starts transmitting SRS, and with an offset to starts listening back for reflected SRS (step 3). The reflected SRS are captured for a total duration T.

Note that the parameters (to, T) may be indicated by the LMF via Location and Positioning Protocol (LPP) measurement request or selected by the UE autonomously. For example:

- to may be dimensioned in relation to the distance to where a closest reflector is expected to be e.g., for a reflector-UE distance of d=30 cm, to = 2d/c = 2 ns.
- T may be dimensioned in relation to the distance to where the furthest reflector is expected to be e.g., for a reflector-UE distance of d=1 km, to = 2d/c = 3 $\mu$s, where c is the speed of light.
- to may also informed by on board proximity sensors.

In step 6, once the UE acquired the reflected S SRS samples, the UE estimates the multipath channel response including AoA, gain G and delay D of each reflected path and stores them in the vectors $G_{SRS}^s, AoA_{SRS}^s, D_{SRS}^s$ respectively.

Note that the UE may use any channel estimator of choice to retrieve the multipath channel e.g. maximum-likelihood estimators, correlation-based methods or Estimation of signal parameters via rotational invariance techniques (ESPRIT) based methods.

Next, in step 7, the UE acquires its own orientation $O_1$ e.g. using its own built-in orientation sensor. It then stamps the SRS measurements with $O_1$.

In steps 8-10, the UE measures the incoming PRS, collects the samples and extracts $G_{PRS}^p, AoA_{PRS}^p, D_{PRS}^p$ using similar processing as before. Similarly, it timestamps the measurements with the orientation $O_2$, corresponding to the UE orientation during the PRS measurement collection.

In step 11, since the UE orientation may have changed from one measurement to the other, before comparing the SRS and PRS channels, the UE checks if $O_1$ and $O_2$ are similar e.g., if their absolute difference is lower than a threshold $dO$ e.g., $dO \leq 5$ *deg*.

Note that in this simple example, a single plane angle is shown, while in real implementations this can be full three-dimensional orientation so that all three Euler angles can be used for alignment. In that sense $O_1$ and $O_2$ can each be a set of Euler triplet angles $O_x = \{\psi, \Theta, \phi\}$.

If the UE concludes in step 12 that the orientation has changed, then it corrects the AoA of the SRS by applying an offset equal to the difference $\Delta = |O_2 - O_1|$

e.g., $$AoA^s_{SRS} = AoA^p_{PRS} - \Delta$$ .

Next, in step 13, the UE uses the angle-aligned measurements to check which PRS paths come from the same direction as any of the SRS reflections. To that end, in step 14, the angle of each PRS path is checked against the angle of each reflected SRS path. Specifically, the AoA of each PRS path is compared with the AoA of the reflected SRS and if a match is found i.e., if the difference between the pair of angles is lower than a threshold $dAoA$ e.g., $dAoA \leq 5$ *deg,* then the UE concludes that the respective PRS path is also a reflection and tags it as such in step 15. Conversely, the UE may conclude that the PRS path is a potential LoS.

Note that the same considerations for three-dimensional comparison are valid for AoA comparison as for the $O_1$ and $O_2$ orientations.

After the comparison above is finalized, the UE may have a list of potential LoS paths, which it compares (in step 16) against each other to extract the most likely LoS. For example, the UE may select the shortest path (smallest delay), or the strongest one (highest gain) as the most likely LoS.

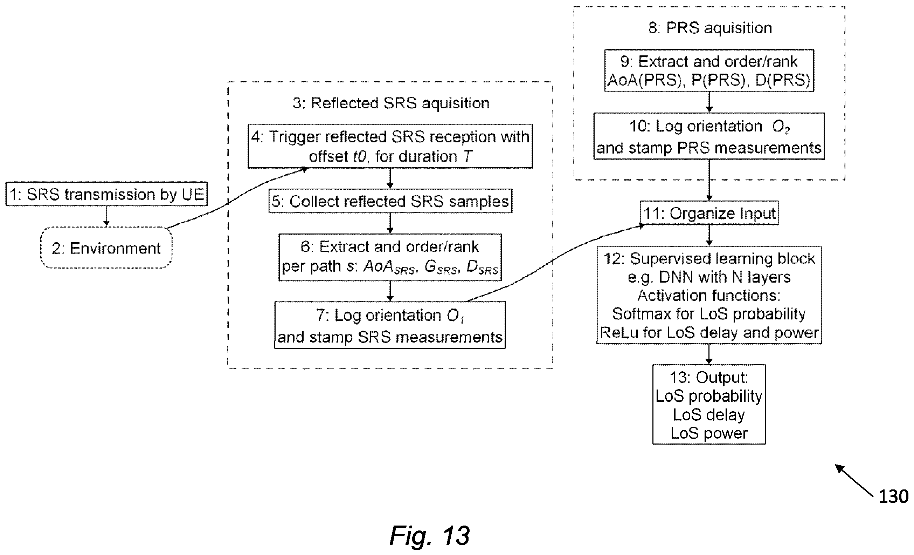

FIG. 13 is a flow chart showing an algorithm, indicated generally by the reference numeral 130, in accordance with an example embodiment.

The algorithm 130 starts at step 1, where SRS signals are transmitted into the environment by a UE.

In response to the transmitted SRS signals, reflected SRS signals are acquired, as set out in steps 4 to 7. These steps include collecting data over time period T (steps 4 and 5), extracting and ordering parameter data, including Angle of Arrival (step 6), and logging UE orientation information (step 7).

PRS signals are also acquired, as set out in steps 9 and 10. These steps include extracting and ordering parameter data (step 9) and logging UE orientation information (step 10).

The parameter information collected for the SRS and PRS signals are organised (step 11) and provided to a supervised learning block (step 12). The supervised learning block uses machine learning principles to generate an output providing processed data including LOS probability for each signal (step 13).

More details regarding an example implementation of the algorithm 130 are provided below.

As noted above, in the algorithm 130, the UE may use a supervised learning approach. After obtaining (and ordering by power) the channel measurements for both reflected SRS and incoming PRS, the UE organizes them at step 11. Specifically, the UE:

- Removes the orientation information from the measured AoA, i.e., computes:

$$aAoA_{SRS} = AoA_{SRS} - O_1$$

$$aAoA_{PRS} = AoA_{PRS} - O_2$$

- Generates an SRS matrix and a PRS matrix:

$$M_{SRS} = \begin{bmatrix} G^1_{SRS} & D^1_{SRS} & aAoA^1_{SRS} \\ G^2_{SRS} & D^2_{SRS} & aAoA^2_{SRS} \\ \dots & \dots & \dots \\ G^S_{SRS} & D^S_{SRS} & aAoA^S_{SRS} \end{bmatrix}$$

$$M_{PRS} = \begin{bmatrix} G^1_{PRS} & D^1_{PRS} & aAoA^1_{PRS} \\ G^2_{PRS} & D^2_{PRS} & aAoA^2_{PRS} \\ \dots & \dots & \dots \\ G^P_{PRS} & D^P_{PRS} & aAoA^P_{PRS} \end{bmatrix}$$

At step 12, the matrices $M_{SRS}$ and $M_{PRS}$ are used in a supervised learning block e.g. implementing a DNN, CNN, or ResNet architecture and with three activation functions e.g.,:

- A Softmax for returning LoS probability
- A ReLU for computing the LoS delay
- A ReLU for computing the LoS power.

To train such architecture, simulated SRS and PRS received signals may be used. For example:

- For PRS signals:

  ∘ a standard 3GPP channel model described in TS 38.901 may be used. For the model, the LOS probability is manually varied e.g. chosen at random from the interval [0, 1].
  ∘ The LOS probability, power and delay represent the labels of single measurement point.
  ∘ The AoA of all reflections P only is stored separately in vector $AoA_{PRS}$.
  ∘ The channel is then convolved with a PRS sequence defined in TS 38.211.
  ∘ Random noise is added to the samples so that the SNR lies anywhere in the interval [v1, $v_2$], where e.g., v1 = -13 dB, v2 = 6 dB.

∘ Orientation angle $O_1$ is chosen for each PRS signal at random, from the uniform distribution $[0, 2\pi]$.

- For reflected SRS signals:

  ∘ a standard 3GPP device-to-device channel model described in TS 38.901 may be used. For the model, the LOS probability is always set to zero.
  ∘ The AoA of the obtained model is replaced at random for Z elements with the $AOA_{PRS}$.
  ∘ The channel is then convolved with a SRS sequence defined in TS 38.211.
  ∘ Random noise is added to the samples so that the SNR lies anywhere in the interval [v3, v4], where e.g., v3 = -13 dB, v4 = 0 dB.
  ∘ Orientation angle $O_2$ is initialized with $O_1$ and for a random subset of measurements is replaced by a random value drawn from the uniform distribution $[0, 2\pi]$.

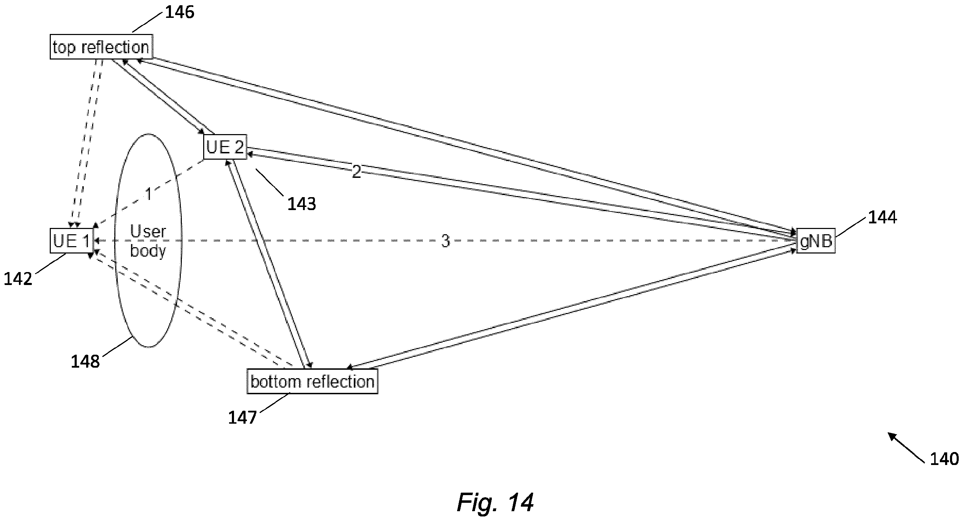

FIG. 14 is a block diagram of a system, indicated generally by the reference numeral 140, in accordance with an example embodiment.

The system 140 comprises a first UE 142, a second UE 143, a gNB 144, a first (top) reflective surface 146 and a second (bottom) reflective surface 147.

The first UE 142 is the mobile phone of a user, which is located in the user's back pocket. The second UE 143 is tethered to the first UE and is worn on the user's head. The oval shape 148 represents the user's body, which for RF energy is mostly lossy, although in some cases can be seen as a reflector.

The second UE 143 is used to transmit uplink reference signals (e.g. SRS). SRS signals (as transmitted by the second UE 143) are received at the gNB 144 (by a LOS link) and at the first UE 142 via a lossy LOS path and two reflected paths. The lossy LOS path from the second UE 143 to the first UE 142 may be weaker than the NLOS path via the first reflective surface 146. With knowledge of the relative position and orientation of the first and second UEs, the first UE need only communicate to the second UE the received NLOS paths from the first and second reflective surfaces for the embodiments described above to work.

If, however, the LOS path from the second UE 143 to the first UE 142 is included in the initial SRS received signal, then the first UE 142 can, after the reception of the gNB PRS:

- Identify the LOS path to UE$_2$ as a unique path;
- Identify the first and second reflections by matching SRS and PRS reception angles as discussed above;
- Identify a third path (from the gNB) in the PRS signal
- Communicate the paths discussed above to the second UE 143 to allow the second UE to first use triangulation between the various path to establish or correct the relative position and then implement the positioning algorithms described above.

In some example embodiments, it is also possible to use pre-filtering, post-filtering (or both) of candidate LOS components in, for example, steps 3, 8 and/or 13 of the algorithms 120 or 130 described above. This could be based on proximity sensors aligned to the orientation vectors $O_1$ or $O_2$. For example, if a proximity sensor has been triggered due to user body proximity covering half a hemisphere of the 3D space, all SRS and PRS LOS candidates can be removed before any algorithm is used. Alternatively, once the algorithm has been run, proximity sensor information could be used in addition to delay and gain to weight the LOS probability. Note that actual proximity sensor hardware is not necessarily required for this - any body/object proximity detection source could be used for the filtering.

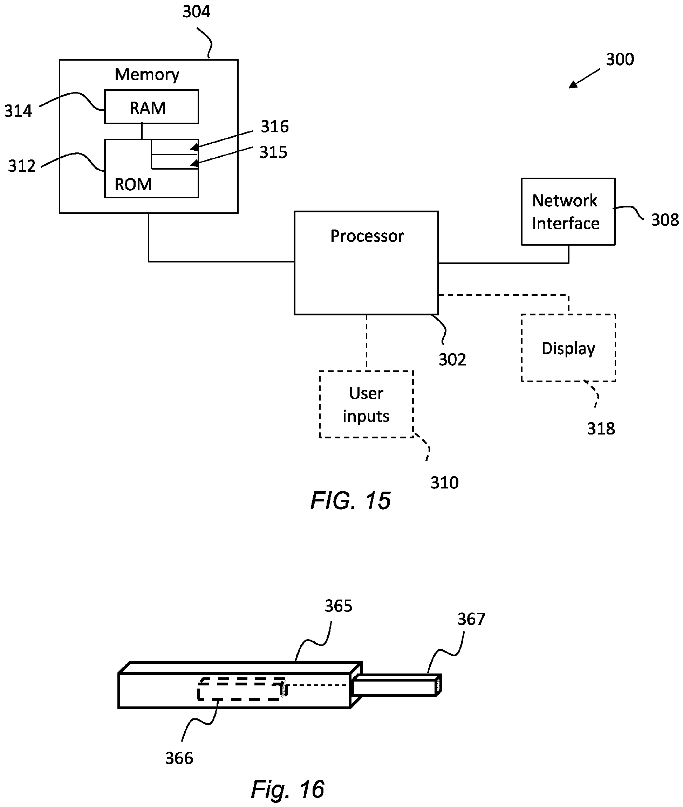

For completeness, FIG. 15 is a schematic diagram of components of one or more of the example embodiments described previously, which hereafter are referred to generically as a processing system 300. The processing system 300 may, for example, be (or may include) the apparatus referred to in the claims below.

The processing system 300 may have a processor 302, a memory 304 coupled to the processor and comprised of a random access memory (RAM) 314 and a read only memory (ROM) 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the methods, algorithms and sequences 20, 50, 60, 120 and 130 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 16 shows tangible media, specifically a removable memory unit 365, storing computer-readable code which when run by a computer may perform methods according to example embodiments described above. The removable memory unit 365 may be a memory stick, e.g. a USB memory stick, having internal memory 366 for storing the computer-readable code. The internal memory 366 may be accessed by a computer system via a connector 367. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams and sequences of FIGS. 2, 5, 6, 12 and 13 are examples only and that various operations depicted therein may be omitted, reordered and/or combined.

It will be appreciated that the above-described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

**Claims**

1. An apparatus comprising means for:

   determining one or more parameters of each of one or more uplink reference signals received at a communication device, wherein the parameters of the uplink reference signals include an angle of arrival of the respective uplink reference signal at the communication device;
   determining one or more parameters of each of one or more downlink reference signals received by the communication device, wherein said parameters of said downlink reference signals include an angle of arrival of the respective downlink reference signal at the communication device;
   identifying groups of non-line-of-sight signals, wherein each group comprises one or more of said uplink reference signals and one or more of said downlink reference signals, wherein said groups are identified based on matching angles of arrival of the respective uplink and downlink reference signals at the communication device; and

excluding downlink reference signals of the identified groups of non-line-of-sight signals from a set of candidate line-of-sight downlink reference signals.

2. An apparatus as claimed in claim 1, further comprising means for:
compensating for differences in an orientation of the communication device when receiving said uplink and downlink reference signals.

3. An apparatus as claimed in claim 2, further comprising means for:
determining said orientation for use in compensating for said differences in orientation.

4. An apparatus as claimed in any one of claims 1 to 3, further comprising means for:
identifying a most-likely line-of-sight downlink reference signal from the set of candidate line-of-sight downlink reference signals.

5. An apparatus as claimed in claim 4, wherein the most-likely line-of-sight downlink reference signal is based on:

gains of the candidate line-of-sight downlink reference signals;
delays of the candidate line-of-sight downlink reference signals; or
a combination of the gains and the delays of the candidate line-of-sight downlink reference signals.

6. An apparatus as claimed in any one of the preceding claims, wherein:

the parameters of said one or more uplink reference signals further comprise one or more of: a gain of the respective reflected signal or a delay of the respective reflected signal; and
the parameters of the downlink reference signals further comprise one or more of: a gain of the respective downlink reference signal or a delay of the respective downlink reference signal.

7. An apparatus as claimed in any one of the preceding claims, further comprising means for:
determining a line-of-sight probability estimate for each of the set of candidate line-of-sight downlink reference signals.

8. An apparatus as claimed in any one of the preceding claims, further comprising means for:
determining that one of said uplink reference signals and one of said downlink reference signals have matching angles of arrival in the event that the angle of arrival of the respective uplink signal and the angle of arrival of the respective downlink reference signal differ by less than a threshold amount.

9. An apparatus as claimed in any one of the preceding claims, further comprising means for:

transmitting the uplink reference signal; and/or receiving the downlink reference signals.

10. An apparatus as claimed in any one of the preceding claims, wherein said communication device is a hybrid device comprising:

a first portion or a first device for transmitting uplink reference signals; and
a second portion or a second device for receiving downlink reference signals.

11. An apparatus as claimed in any one of the preceding claims, wherein some or all of said uplink reference signals are reflections of an uplink reference signal transmitted by the communication device.

12. An apparatus as claimed in any one of the preceding claims, wherein said communication device is a full-duplex communication device.

13. An apparatus as claimed in any one of the preceding claims, wherein the uplink reference signal is a sounding reference signal and/or the downlink reference signal is positioning reference signal.

14. An apparatus as claimed in any one of the preceding claims, wherein the apparatus is a user equipment.

15. A method comprising:

determining one or more parameters of each of one or more uplink reference signals received at a communication device, wherein the parameters of the uplink reference signals include an angle of arrival of the respective uplink reference signal at the communication device;
determining one or more parameters of each of one or more downlink reference signals received by the communication device, wherein said parameters of said downlink reference signals include an angle of arrival of the respective downlink reference signal at the communication device;
identifying groups of non-line-of-sight signals, wherein each group comprises one or more of said uplink reference signals and one or more of said downlink reference signals, wherein said groups are identified based on matching angles of arrival of the respective uplink and downlink reference signals at the communication device; and

excluding downlink reference signals of the identified groups of non-line-of-sight signals from a set of candidate line-of-sight downlink reference signals.

16. A computer program comprising instructions which, when executed by an apparatus, cause the apparatus to:

determine one or more parameters of each of one or more uplink reference signals received at a communication device, wherein the parameters of the uplink reference signals include an angle of arrival of the respective uplink reference signal at the communication device;

determine one or more parameters of each of one or more downlink reference signals received by the communication device, wherein said parameters of said downlink reference signals include an angle of arrival of the respective downlink reference signal at the communication device;

identify groups of non-line-of-sight signals, wherein each group comprises one or more of said uplink reference signals and one or more of said downlink reference signals, wherein said groups are identified based on matching angles of arrival of the respective uplink and downlink reference signals at the communication device; and

exclude downlink reference signals of the identified groups of non-line-of-sight signals from a set of candidate line-of-sight downlink reference signals.

```
        ┌──────────┐                    ┌──────────┐
   12   │  User    │◄─────  16  ───────│ Network  │   14
        │  device  │                    │   Node   │
        └──────────┘                    └──────────┘
```

*Fig. 1*                                              10

```
                ┌─────────────────────┐
                │  Determine uplink    │
                │  signal parameters   │
    22          └─────────────────────┘
                          │
                          ▼
                ┌─────────────────────┐
                │  Determine downlink  │
                │  signal parameters   │
    24          └─────────────────────┘
                          │
                          ▼
                ┌─────────────────────┐
                │  Identify groups of  │
                │    NLOS signals      │
    26          └─────────────────────┘
                          │
                          ▼
                ┌─────────────────────┐
                │  Exclude NLOS from   │
                │ candidate LOS signals│
    28          └─────────────────────┘
```

                                                     20

*Fig. 2*

*Fig. 3*

*Fig. 4*

```
┌─────────────────────────┐
│   Determine UL/DL       │
│   signal parameters     │
└─────────────────────────┘
52

            │
            ▼

┌─────────────────────────┐
│   Compensate for        │
│   change in orientation │
└─────────────────────────┘
54

            │
            ▼

┌─────────────────────────┐
│   Identify candidate    │
│   LOS signals           │
└─────────────────────────┘
56

            │
            ▼

┌─────────────────────────┐
│   Identify most likely  │
│   LOS signal and/or LOS │
│   probability estimates │
└─────────────────────────┘
58
                                          50
```

*Fig. 5*

```
        62              64                    66
      ┌────┐          ┌─────┐              ┌─────┐
      │ UE │          │ gNB │              │ LMF │
      └────┘          └─────┘              └─────┘
```

1: Configure RTT

2: UL SRS

3: measure SRS and identify LOS

4: SRS measurements report

5: Measure reflected SRS:
per path $s$: $AoA_{SRS}$, gain ($G_{SRS}$), delay ($D_{SRS}$)
Log own orientation $O_1$

6: DL PRS

7: Measure DL-PRS:
per path $p$: $AoA_{PRS}$, gain ($G_{PRS}$), delay ($D_{PRS}$)
Log own orientation $O_2$

8: (A) Ranking
Rank SRS multipaths e.g. by power
Rank PRS multipaths e.g. by power

(B) Coordinate system alignment
Compare $O_1$ and $O_2$ and align AOAs
from SRS and PRS measurements

(C) Channel matching
Compare aligned and ranked $AoA_{SRS}$, with $AoA_{PRS}$
Identify main reflections e.g. by matching AoAs
Identiy LOS by mismatching AoAs e.g. by exclusion

9: PRS measurement report

*Fig. 6*

Fig. 7

Fig. 8

Fig. 9

104

100

102

Fig. 10

112

110

Fig. 11

*Fig. 12*

*Fig. 13*

8: PRS aquisition

9: Extract and order/rank AoA(PRS), P(PRS), D(PRS)

10: Log orientation $O_2$ and stamp PRS measurements

3: Reflected SRS aquisition

4: Trigger reflected SRS reception with offset $t0$, for duration $T$

1: SRS transmission by UE

5: Collect reflected SRS samples

2: Environment

6: Extract and order/rank per path $s$: $AoA_{SRS}$, $G_{SRS}$, $D_{SRS}$

7: Log orientation $O_1$ and stamp SRS measurements

11: Organize Input

12: Supervised learning block e.g. DNN with N layers Activation functions: Softmax for LoS probability ReLu for LoS delay and power

13: Output: LoS probability LoS delay LoS power

130

*Fig. 14*

*FIG. 15*

*Fig. 16*

Europäisches
Patentamt
European
Patent Office
Office européen
des brevets

# EUROPEAN SEARCH REPORT

Application Number

EP 24 15 9748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/152414 A1 (NOKIA TECHNOLOGIES OY [FI]) 21 July 2022 (2022-07-21) * paragraphs [0011], [0050], [0056] - [0065], [0070] - [0072], [0077]; figure 1 * | 1-16 | INV. G01S5/00 G01S5/02 G01S13/00 G01S7/00 |
| X | US 2021/360370 A1 (SUNDARARAJAN JAY KUMAR [US] ET AL) 18 November 2021 (2021-11-18) * paragraphs [0007] - [0010], [0112], [0113], [0162], [0163], [0207] - [0214], [0232] - [0237]; figure 8A * | 1,15,16 | |
| A | US 2022/322035 A1 (FAKOORIAN SEYED ALI AKBAR [US] ET AL) 6 October 2022 (2022-10-06) * paragraph [0040] * | 2,3 | |
| A | US 2014/087754 A1 (SIOMINA IANA [SE] ET AL) 27 March 2014 (2014-03-27) * paragraph [0120] * | 4,7 | TECHNICAL FIELDS SEARCHED (IPC) G01S |

The present search report has been drawn up for all claims

| Place of search | Date of completion of the search | Examiner |
|---|---|---|
| The Hague | 16 July 2024 | Thareau-Berthet, N |

## ANNEX TO THE EUROPEAN SEARCH REPORT
## ON EUROPEAN PATENT APPLICATION NO.

EP 24 15 9748

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2024

| Patent document cited in search report | Publication date | Patent family member(s) | Publication date |
|---|---|---|---|
| WO 2022152414 A1 | 21-07-2022 | EP 4278742 A1 | 22-11-2023 |
| | | US 2024057019 A1 | 15-02-2024 |
| | | WO 2022152414 A1 | 21-07-2022 |
| US 2021360370 A1 | 18-11-2021 | BR 112022022117 A2 | 13-12-2022 |
| | | CN 115552994 A | 30-12-2022 |
| | | EP 4150988 A1 | 22-03-2023 |
| | | JP 2023525446 A | 16-06-2023 |
| | | KR 20230009886 A | 17-01-2023 |
| | | TW 202203666 A | 16-01-2022 |
| | | US 2021360370 A1 | 18-11-2021 |
| | | WO 2021231875 A1 | 18-11-2021 |
| US 2022322035 A1 | 06-10-2022 | CN 115150881 A | 04-10-2022 |
| | | US 2022322035 A1 | 06-10-2022 |
| | | US 2023421995 A1 | 28-12-2023 |
| | | US 2023421998 A1 | 28-12-2023 |
| US 2014087754 A1 | 27-03-2014 | CN 104798393 A | 22-07-2015 |
| | | EP 2901737 A1 | 05-08-2015 |
| | | US 2014087754 A1 | 27-03-2014 |
| | | WO 2014047824 A1 | 03-04-2014 |

EPO FORM P0459

For more details about this annex : see Official Journal of the European Patent Office, No. 12/82